# FASCICULE DE BREVET EUROPEEN

(11) **EP 4 463 341 B1**
(45) Date de publication et mention de la délivrance du brevet: **12.08.2026**
(21) Numéro de dépôt: 23700770.3
(22) Date de dépôt: 12.01.2023
(51) Int. Cl.: B60R 5/04, B60R 13/01

(54) **DISPOSITIF DE RECOUVREMENT D'UN COMPARTIMENT À BAGAGES DE VÉHICULE AUTOMOBILE**
ABDECKVORRICHTUNG FÜR DEN GEPÄCKRAUM EINES KRAFTFAHRZEUGS
DEVICE FOR COVERING A LUGGAGE COMPARTMENT OF A MOTOR VEHICLE

(30) Priorité: 14.01.2022 FR 2200325
(43) Date de publication de la demande: 20.11.2024
(73) Titulaire: TREVES Products, Services & Innovation, 92130 Issy-Les-Moulineaux (FR)
(72) Inventeur: AYAD, Mustapha, 75008 Paris (FR); BRAS, Jean-Marc, 75008 Paris (FR)
(74) Mandataire: Sayettat, Julien Christian
(86) Numéro de dépôt international: PCT/EP2023/050594
(87) Numéro de publication internationale: WO 2023/135191

(56) Documents cités:
- FR-A1- 2 850 917
- FR-A1- 2 967 108
- FR-A1- 2 981 023

## Description

L'invention concerne un dispositif de recouvrement d'un compartiment à bagages de véhicule automobile, une tablette et un support latéral d'un tel dispositif.

Il est connu, notamment du document FR-2 981 023, de réaliser un dispositif de recouvrement d'un compartiment à bagages de véhicule automobile, ledit dispositif comprenant une tablette de recouvrement dudit compartiment selon une configuration de recouvrement où elle s'étend selon un plan généralement horizontal, ladite tablette présentant les caractéristiques suivantes :
- elle comprend un panneau avant et un panneau arrière articulés entre eux par une charnière transversale reliant deux bords internes respectifs desdits panneaux,
- ladite charnière est disposée sensiblement dans le prolongement de la face supérieure desdits panneaux, de manière à permettre un pliage de ladite tablette vers une configuration semi-ouverte d'accès audit compartiment par rotation dudit panneau arrière vers le haut,
ledit dispositif comprenant en outre deux supports latéraux desdits panneaux dans la configuration de recouvrement.

Avec un tel agencement, on peut réaliser une rotation du panneau arrière autour de la charnière pour passer de la configuration de recouvrement à la configuration d'accès.

Cependant, il est nécessaire de bloquer le panneau avant en rotation quand le panneau arrière est actionné en vue de mettre la tablette en configuration d'accès.

Par ailleurs, le panneau avant doit être fixé par ses coins avant sur les supports de façon amovible, de manière à permettre un démontage de la tablette du véhicule.

Les dispositifs existants sont souvent complexes et coûteux à réaliser, mettant en jeu une multiplicité de composants pour permettre l'ancrage de la tablette sur les supports.

L'invention a pour but de pallier ces inconvénients.

A cet effet, l'invention propose un dispositif de recouvrement d'un compartiment à bagages de véhicule automobile, ledit dispositif comprenant une tablette de recouvrement dudit compartiment selon une configuration de recouvrement où elle s'étend selon un plan généralement horizontal, ladite tablette présentant les caractéristiques suivantes :
- elle comprend un panneau avant et un panneau arrière articulés entre eux par une charnière transversale reliant deux bords internes respectifs desdits panneaux,
- quand ladite tablette est en configuration de recouvrement, lesdits bords internes présentent en leurs extrémités latérales des tranches écartées l'une de l'autre de manière à définir deux évidements latéraux, l'écart entre lesdites tranches s'accentuant à mesure que l'on se dirige vers le haut,
- ladite charnière est disposée sensiblement dans le prolongement de la face supérieure desdits panneaux, de manière à permettre un pliage de ladite tablette vers une configuration semi-ouverte d'accès audit compartiment par rotation dudit panneau arrière vers le haut,
ledit dispositif comprenant en outre deux supports latéraux desdits panneaux dans la configuration de recouvrement, chacun desdits supports comprenant un taquet saillant vers le haut et s'élargissant depuis sa base, en présentant une géométrie analogue à celle de l'évidement correspondant de sorte que, en configuration de recouvrement, un taquet se loge en contact sensiblement ajusté dans l'évidement correspondant de manière à bloquer lesdits bords internes en translation longitudinale et verticale, ledit dispositif présentant en outre les caractéristiques suivantes :
- en configuration de recouvrement, chacun des coins avant dudit panneau avant s'emboite dans un logement prévu à l'avant du support correspondant,
- ledit logement présente un surplomb dirigé vers l'arrière de manière à bloquer ledit coin en translation vers le haut,
- ledit logement est agencé de manière à permettre une rotation vers le haut dudit coin autour du bord avant dudit panneau avant, de manière à permettre, à partir de ladite configuration d'accès, un retrait dudit panneau avant desdits supports pour démonter ladite tablette dudit véhicule.

Dans cette description, les termes de positionnement dans l'espace (haut, bas, supérieur, longitudinal, transversal, latéral, avant, arrière, vertical, horizontal, ...) sont pris en référence au dispositif disposé dans le véhicule, la tablette étant en configuration de recouvrement.

Avec un tel agencement, basé uniquement sur des jeux de formes complémentaires données à la tablette et aux supports, on simplifie la réalisation du dispositif et on en minimise le coût de fabrication.

D'autres particularités et avantages de l'invention apparaîtront dans la description qui suit, faite en référence aux figures jointes, dans lesquelles :

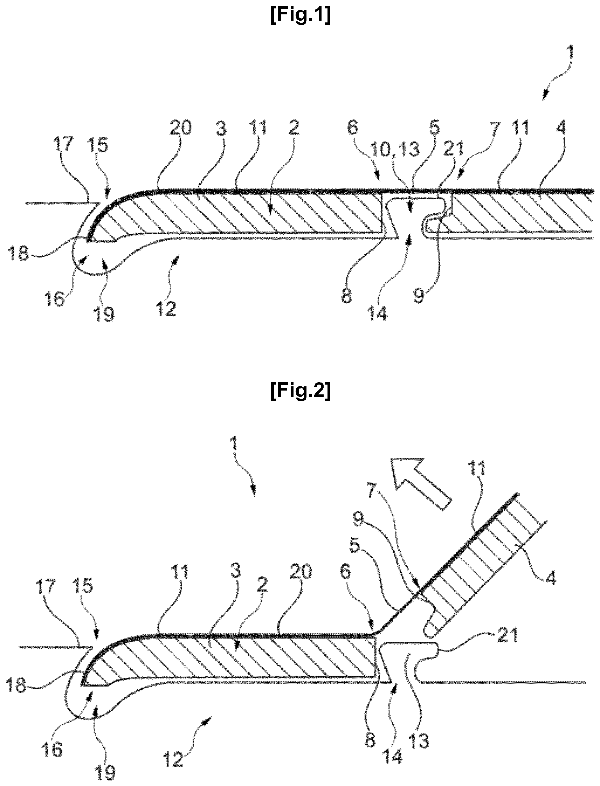

[Fig.1] est une vue schématique en coupe longitudinale partielle en partie latérale d'un dispositif selon une réalisation, la tablette étant en configuration de recouvrement,
[Fig.2] est analogue à la figure 1, la tablette étant actionnée vers sa configuration d'accès,

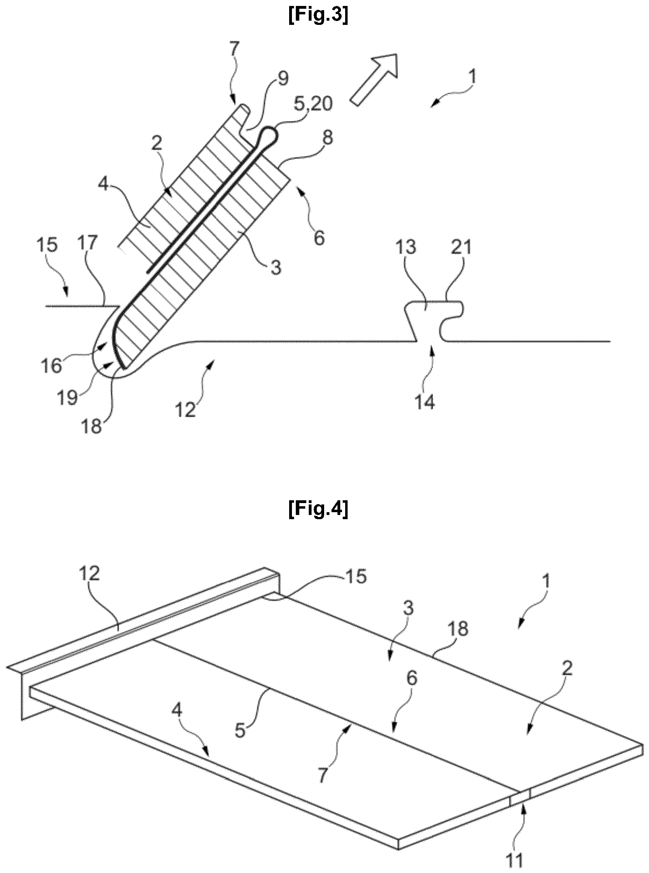

[Fig.3] est analogue aux figures précédentes, le panneau avant de la tablette ayant été actionné en rotation en vue du démontage de ladite tablette,
[Fig.4] est une vue schématique en perspective partielle du dispositif des figures précédentes, la tablette étant en configuration de recouvrement.

En référence aux figures, on décrit un dispositif 1 de recouvrement d'un compartiment à bagages de véhicule automobile, ledit dispositif comprenant une tablette 2 de recouvrement dudit compartiment selon une configuration de recouvrement où elle s'étend selon un plan généralement horizontal, ladite tablette présentant les caractéristiques suivantes :
- elle comprend un panneau avant 3 et un panneau arrière 4 articulés entre eux par une charnière 5 transversale reliant deux bords internes 6,7 respectifs desdits panneaux,
- quand ladite tablette est en configuration de recouvrement, lesdits bords internes présentent en leurs extrémités latérales des tranches 8,9 écartées l'une de l'autre de manière à définir deux évidements 10 latéraux, l'écart entre lesdites tranches s'accentuant à mesure que l'on se dirige vers le haut,
- ladite charnière est disposée sensiblement dans le prolongement de la face supérieure 11 desdits panneaux, de manière à permettre un pliage de ladite tablette vers une configuration semi-ouverte d'accès audit compartiment par rotation dudit panneau arrière vers le haut,
ledit dispositif comprenant en outre deux supports latéraux 12 desdits panneaux dans la configuration de recouvrement, chacun desdits supports comprenant un taquet 13 saillant vers le haut et s'élargissant depuis sa base 14, en présentant une géométrie analogue à celle de l'évidement 10 correspondant de sorte que, en configuration de recouvrement, un taquet 13 se loge en contact sensiblement ajusté dans l'évidement 10 correspondant de manière à bloquer lesdits bords internes en translation longitudinale et verticale, ledit dispositif présentant en outre les caractéristiques suivantes :
- en configuration de recouvrement, chacun des coins avant 15 dudit panneau avant s'emboite dans un logement 16 prévu à l'avant du support 12 correspondant,
- ledit logement présente un surplomb 17 dirigé vers l'arrière de manière à bloquer ledit coin en translation vers le haut,
- ledit logement est agencé de manière à permettre une rotation vers le haut dudit coin autour du bord avant 18 dudit panneau avant, de manière à permettre, à partir de ladite configuration d'accès, un retrait dudit panneau avant desdits supports pour démonter ladite tablette dudit véhicule.

Selon la réalisation représentée, un logement 16 présente un espace 19, s'étendant vers le bas, d'accueil du coin 15 correspondant lors de sa rotation en vue du démontage de la tablette 2.

Selon la réalisation représentée, la charnière 5 est formée par une bande de revêtement - par exemple en matériau fibreux tel que de la moquette - s'étendant entre les bord internes 6,7, ladite bande étant issue d'une couche de revêtement 20 revêtant la face supérieure 11 des panneaux avant 3 et arrière 4.

Selon une variante non représentée, les panneaux avant 3 et arrière 4 sont moulés d'une pièce dans un matériau plastique et reliés entre eux par une bande souple dudit matériau formant charnière 5.

Selon la réalisation représentée, la charnière 5 recouvre les taquets 13 de manière à les masquer quand la tablette 1 est en configuration de recouvrement.

Selon la réalisation représentée, un taquet 13 présente en vue latérale une forme générale de L renversé dont la barre horizontale 21 pointe vers l'arrière.

En variante non représentée, un taquet 13 présente en vue latérale une forme générale de T.

On décrit à présent une tablette 2 d'un tel dispositif 1, ladite tablette présentant les caractéristiques suivantes :
- elle comprend un panneau avant 3 et un panneau arrière 4 articulés entre eux par une charnière 5 transversale reliant deux bords internes 6,7 respectifs desdits panneaux,
- quand ladite tablette est en configuration de recouvrement, lesdits bords internes présentent en leurs extrémités latérales des tranches 8,9 écartées l'une de l'autre de manière à définir deux évidements 10 latéraux, l'écart entre lesdites tranches s'accentuant à mesure que l'on se dirige vers le haut,
- ladite charnière est disposée sensiblement dans le prolongement de la face supérieure 11 desdits panneaux, de manière à permettre un pliage de ladite tablette vers une configuration semi-ouverte d'accès audit compartiment par rotation dudit panneau arrière vers le haut.

On décrit enfin un support latéral 12 d'un tel dispositif 1, ledit support comprenant :
- un taquet 13 saillant vers le haut et s'élargissant depuis sa base 14, ledit taquet étant destiné à être logé dans un évidement 10 prévu entre deux panneaux 3,4 de tablette 2,
- un logement 16 destiné à recevoir un coin avant 15 de panneau avant 3, ledit logement étant disposé à l'avant dudit support, ledit logement présentant un surplomb 17 dirigé vers l'arrière et un espace d'accueil 19, s'étendant vers le bas, destiné à recevoir ledit coin lors de sa rotation en vue du démontage de ladite tablette.

## Revendications

1. Dispositif (1) de recouvrement d'un compartiment à bagages de véhicule automobile, ledit dispositif comprenant une tablette (2) de recouvrement dudit compartiment selon une configuration de recouvrement où elle s'étend selon un plan généralement horizontal, ladite tablette présentant les caractéristiques suivantes :
• elle comprend un panneau avant (3) et un panneau arrière (4) articulés entre eux par une charnière (5) transversale reliant deux bords internes (6,7) respectifs desdits panneaux,
• quand ladite tablette est en configuration de recouvrement, lesdits bords internes présentent en leurs extrémités latérales des tranches (8,9) écartées l'une de l'autre de manière à définir deux évidements (10) latéraux, l'écart entre lesdites tranches s'accentuant à mesure que l'on se dirige vers le haut,
• ladite charnière est disposée sensiblement dans le prolongement de la face supérieure (11) desdits panneaux, de manière à permettre un pliage de ladite tablette vers une configuration semi-ouverte d'accès audit compartiment par rotation dudit panneau arrière vers le haut,
ledit dispositif comprenant en outre deux supports latéraux (12) desdits panneaux dans la configuration de recouvrement, chacun desdits supports comprenant un taquet (13) saillant vers le haut et s'élargissant depuis sa base (14), en présentant une géométrie analogue à celle de l'évidement (10) correspondant de sorte que, en configuration de recouvrement, un taquet (13) se loge en contact sensiblement ajusté dans l'évidement (10) correspondant de manière à bloquer lesdits bords internes en translation longitudinale et verticale, ledit dispositif étant **caractérisé en ce que** :
• en configuration de recouvrement, chacun des coins avant (15) dudit panneau avant s'emboite dans un logement (16) prévu à l'avant du support (12) correspondant,
• ledit logement présente un surplomb (17) dirigé vers l'arrière de manière à bloquer ledit coin en translation vers le haut,
• ledit logement est agencé de manière à permettre une rotation vers le haut dudit coin autour du bord avant (18) dudit panneau avant, de manière à permettre, à partir de ladite configuration d'accès, un retrait dudit panneau avant desdits supports pour démonter ladite tablette dudit véhicule.

2. Dispositif selon la revendication 1, **caractérisé en ce qu'**un logement (16) présente un espace (19), s'étendant vers le bas, d'accueil du coin (15) correspondant lors de sa rotation en vue du démontage de la tablette (2).

3. Dispositif selon l'une des revendications 1 ou 2, **caractérisé en ce que** la charnière (5) est formée par une bande de revêtement s'étendant entre les bords internes (6,7), ladite bande étant issue d'une couche de revêtement (20) revêtant la face supérieure (11) des panneaux avant (3) et arrière (4).

4. Dispositif selon l'une des revendications 1 ou 2, **caractérisé en ce que** les panneaux avant (3) et arrière (4) sont moulés d'une pièce dans un matériau plastique et reliés entre eux par une bande souple dudit matériau formant charnière (5).

5. Dispositif selon l'une quelconque des revendications précédentes, **caractérisé en ce que** la charnière (5) recouvre les taquets (13) de manière à les masquer quand la tablette (2) est en configuration de recouvrement.

6. Dispositif selon l'une quelconque des revendications précédentes, **caractérisé en ce qu'**un taquet (13) présente en vue latérale une forme générale de L renversé dont la barre horizontale (21) pointe vers l'arrière.

## Patentansprüche

1. Abdeckvorrichtung (1) für einen Gepäckraum eines Kraftfahrzeugs, wobei die Vorrichtung eine Abdeckplatte (2) für den Raum gemäß einer Abdeckkonfiguration, in der sie sich in einer im Wesentlichen horizontalen Ebene erstreckt, umfasst, wobei die Platte die folgenden Merkmale aufweist:
• sie umfasst eine vordere Tafel (3) und eine hintere Tafel (4), die durch ein Querscharnier (5) aneinander angelenkt sind, das zwei jeweilige innere Ränder (6,7) der Tafeln verbindet,
• wenn die Platte in der Abdeckkonfiguration ist, weisen die inneren Ränder an ihren seitlichen Enden Abschnitte (8,9) auf, die voneinander beabstandet sind, um zwei seitliche Aussparungen (10) zu definieren, wobei sich der Abstand zwischen den Abschnitten nach oben hin vergrößert,
• das Scharnier ist im Wesentlichen in der Verlängerung der Oberseite (11) der Tafeln angeordnet, um ein Klappen der Platte durch Drehen der hinteren Tafel nach oben in eine halbgeöffnete Konfiguration für einen Zugang zu dem Raum zu ermöglichen,
wobei die Vorrichtung ferner zwei seitliche Halterungen (12) für die Tafeln in der Abdeckkonfiguration umfasst, wobei jede der Halterungen einen Anschlag (13) umfasst, der nach oben hervorsteht und sich von seiner Basis (14) aus verbreitert, indem er eine Geometrie analog zu jener der entsprechenden Aussparung (10) aufweist, sodass in der Abdeckkonfiguration ein Anschlag (13) im Wesentlichen passgenau in der entsprechenden Aussparung (10) aufgenommen ist, um die inneren Ränder gegen Längs- und Vertikalverschiebung zu sichern, wobei die Vorrichtung **dadurch gekennzeichnet ist, dass**:
• in der Abdeckkonfiguration jede der vorderen Keile (15) der vorderen Tafel in eine an der Vorderseite der entsprechenden Halterung (12) bereitgestellte Aufnahme (16) einrastet,
• die Aufnahme einen nach hinten gerichteten Überstand (17) aufweist, um den Keil gegen eine Verschiebung nach oben zu sichern,
• die Aufnahme ausgebildet ist, um eine Drehung nach oben des Keils um den vorderen Rand (18) der vorderen Tafel zu ermöglichen, um ausgehend von der Zugangskonfiguration ein Herausziehen der vorderen Tafel aus den Halterungen zu ermöglichen, um die Platte aus dem Fahrzeug auszubauen.

2. Vorrichtung nach Anspruch 1, **dadurch gekennzeichnet, dass** eine Aufnahme (16) einen sich nach unten erstreckenden Freiraum (19) zum Aufnehmen des entsprechenden Keils (15) bei seiner Drehung zum Ausbauen der Platte (2) aufweist.

3. Vorrichtung nach einem der Ansprüche 1 oder 2, **dadurch gekennzeichnet, dass** das Scharnier (5) durch ein Verkleidungsband gebildet ist, das sich zwischen den inneren Rändern (6,7) erstreckt, wobei das Band aus einer Verkleidungsschicht (20) stammt, die die Oberseite (11) der vorderen (3) und der hinteren (4) Tafel verkleidet.

4. Vorrichtung nach einem der Ansprüche 1 oder 2, **dadurch gekennzeichnet, dass** die vordere (3) und die hintere (4) Tafel einteilig aus einem Kunststoff geformt und durch ein flexibles Band des Materials, das ein Scharnier (5) bildet, miteinander verbunden sind.

5. Vorrichtung nach einem der vorstehenden Ansprüche, **dadurch gekennzeichnet, dass** das Scharnier (5) die Anschläge (13) abdeckt, um diese zu verdecken, wenn die Platte (2) in einer Abdeckkonfiguration ist.

6. Vorrichtung nach einem der vorstehenden Ansprüche, **dadurch gekennzeichnet, dass** ein Anschlag (13) in einer Seitenansicht eine allgemeine Form eines umgekehrten L aufweist, dessen horizontaler Balken (21) nach hinten zeigt.

## Claims

1. A device (1) for covering a motor vehicle luggage compartment, said device comprising a shelf (2) for said compartment in a covering configuration in which it extends in a generally horizontal plane, said panel having the following characteristics:
• it comprises a front panel (3) and a rear panel (4) hinged together by a transverse hinge (5) connecting two respective inner edges (6, 7) of said panels,
• when said tray is in the covering configuration, said inner edges have, at their lateral ends, flanges (8, 9) spaced apart from one another so as to define two lateral recesses (10), the gap between said flanges increasing as one moves upwards,
• said hinge is arranged substantially in line with the upper face (11) of said panels, so as to allow said shelf to be folded into a semi-open configuration providing access to said compartment by rotating said rear panel upwards,
said device further comprising two lateral supports (12) for said panels in the overlapping configuration, each of said supports comprising a stop (13) projecting upwards and widening from its base (14), having a geometry similar to that of the corresponding recess (10) so that, in the overlapping configuration, a stop (13) fits into the corresponding recess (10) with a substantially tight fit so as to lock said inner edges against longitudinal and vertical translation, said device being **characterised in that**:
• in the overlapping configuration, each of the front corners (15) of said front panel fits into a recess (16) provided at the front of the corresponding support (12),
• said recess has an overhang (17) directed projection so as to lock said corner against upward movement,
• said recess is arranged to allow said corner to rotate upwards about the front edge (18) of said front panel, so as to allow, from said access configuration, removal of said front panel from said supports in order to dismantle said shelf from said vehicle.

2. Device according to claim 1, **characterised in that** a recess (16) has a downwardly extending space (19) for receiving the corresponding front corner (15) during its rotation for the purpose of removing the shelf (2).

3. Device according to one of claims 1 or 2, **characterised in that** the hinge (5) is formed by a covering strip extending between the inner edges (6, 7), said strip being formed from a covering layer (20) covering the upper face (11) of the front (3) and rear (4) panels.

4. Device according to one of claims 1 or 2, **characterised in that** the front (3) and rear (4) panels are moulded in one piece from a plastic material and connected to one another by a flexible strip of said material forming a hinge (5).

5. A device according to any one of the preceding claims, **characterised in that** the hinge (5) covers the stops (13) so as to conceal them when the shelf (2) is in the folded-over configuration.

6. A device according to any one of the preceding claims, **characterised in that** a stop (13) has, in side view, a general shape of an inverted L, the horizontal bar (21) of which points rearwards.
